# EUROPEAN PATENT APPLICATION

(11) **EP 3 530 626 A1**
(43) Date of publication of application: **28.08.2019**
(21) Application number: 19158165.1
(22) Date of filing: 19.02.2019
(51) Int. Cl.: C02F 1/72, C02F 1/76, C02F 1/00, C02F 103/32

(54) **METHOD FOR TREATING AGRO-INDUSTRIAL RESIDUAL WATERS BY OXIDATION-PRECIPITATION PROCESSES**

(30) Priority: 23.02.2018 PT 2018110591
(71) Applicant: Cebal - Centro De Biotecnologia Agrícola E Agro-Alimentar Do Alentejo, 7801-908 Beja (PT); Instituto Politécnico de Beja (IPBEJA), 7800-295 Beja (PT)
(72) Inventor: SILVA PRAZERES, Ana Rita, 7800-631 Cabeça Gorda (PT); SIMÃO MADEIRA, Luís Miguel, 8000-319 Faro (PT); GUERREIRO LUZ, Silvana, 7600-058 Aljustrel (PT); PEDRO FERNANDES, Flávia Alexandra, 2000-210 Santarém (PT); GODINHO AFONSO, Alexandra Isabel, 7830-420 Serpa (PT); SILVA GUERREIRO, Raquel Cristina, 7800-295 Beja (PT); RAPOSO SILVESTRE, Adriana Isabel, 7670-368 Ourique (PT); ARAÚJO ALMEIDA, Maria Adelaide, 7800-850 Beja (PT); SOUSA JERÓNIMO ALVES, Eliana Alexandra, 7670-283 Ourique (PT)
(74) Representative: Lourenço Martinho do Rosário, Ana Margarida

(57) **Abstract**

The invention described herein relates to a method for treatment of raw agro-industrial wastewater by physicochemical oxidation-precipitation processes, by incorporating strong oxidants, namely hydrogen peroxide, calcium hypochlorite and calcium peroxide (1) up to 24 hours, under violent agitation at room temperature and pressure in the presence of light and oxygen at concentrations between 1 to 15 g L⁻¹ with the formation of particle agglomerates, suspensions and foams (2) (3), followed by two agitation systems for 2 minutes (4) (5) with average and low velocity with formation of particle agglomerates, sedimentation of the particle agglomerates forming two distinct phases (treated water and sludge) (6), resting for up to 72 hours with the treated water in contact with the sludge (7), separation of the two phases. The oxidation-precipitation processes decreases the level of chemical oxygen demand (COD), turbidity, phosphorus, calcium, magnesium, characteristic absorbances and total phenols. The generation of sludge with different properties is verified.

## Description

### Scope of the Invention

The invention described herein relates to a method for treatment of raw agro-industrial wastewater by physicochemical oxidation-precipitation processes, namely from dairies, slaughterhouses, mills and wineries, by incorporating strong oxidants, namely hydrogen peroxide, calcium hypochlorite and calcium peroxide at concentrations between 1 to 15 g L⁻¹, up to 24 hours in raw wastewater under violent agitation (1200-1400 rpm), at room temperature and pressure in the presence of light and oxygen, followed by two agitation systems at different speeds: average (700-800 rpm for 1 minute) and low (300-400 rpm for 1 minute), sedimentation step for up to 2 hours with formation of the precipitate called sludge, resting for up to 72 hours with the supernatant in contact with the precipitate. At the end of this time, separation of the formed stages (treated water and sludge) takes place. The treatment of agro-industrial waste water using these oxidation processes decreases the level of organic and microbiological contamination of raw agro-industrial waste water with respect to organic matter monitored by Chemical Oxygen Demand (COD) (3,9-97,7), turbidity (17,9-100,0), phosphorus (14,3-98,3), calcium (0,4-60,4), magnesium (4,5-56,8), characteristic absorbance (14,2-100,0) and total phenols (12,3-94,5). The treatment of raw agro-industrial wastewater using these oxidation processes generates by-products of economic value due to their organic matter and nutrients content. These by-products may be subject to valorisation processes.

The treatment referred to in the current invention consists of incorporating three types of strong oxidants. The treatment processes begin with the immediate incorporation of strong oxidants at concentrations between 1 to 15 g L⁻¹ into the raw agro-industrial wastewater, which remains in violent agitation from 1200-1400 rpm, at room pressure and temperature in the presence of light and oxygen. The mixture of raw agro-industrial residual water with the oxidant remains in violent agitation for up to 24 hours. After 24 hours of hydraulic retention, two agitation systems are applied: average agitation of 700-800 rpm for 1 minute, and low agitation of 300-400 rpm for 1 minute. The application of strong oxidants to raw agro-industrial wastewater generates the formation of particle agglomerates, suspensions and foams. These particle agglomerates settle for 2 hours after interruption of the agitation systems, forming two distinct phases. After sedimentation, a resting stage occurs with the supernatant in contact with the precipitate for up to 72 hours. After the resting step, the phases formed are separated. The quality of treated wastewater was monitored according to the following parameters: pH, conductivity, characteristic absorbance, (220, 254, 410 and 600 nm) turbidity, COD, phosphorus, calcium, magnesium, bicarbonates, carbonates, hydroxides and total phenols.

### Background of the Invention

Agro-industrial wastewater poses a social and environmental issue because of its high level of contamination, which can lead to contamination of soil and waters and spread disease. These effluents show high levels of salinity and organic matter and variable pH values, and may affect the properties of the receptor means. In addition, they have solid suspensions, oils and fats, and nutrients in their constitution.

Some biological and physicochemical treatment processes have been studied and implemented to reduce the environmental and social risk of this wastewater. Within the biological treatments, it is possible to emphasize the use of **aerobic** (Petruccioli et al. (2000). High-rate aerobic treatment of winery wastewater using bioreactors with free and immobilized activated sludge. Journal of Bioscience and Bioengineering 90(4), 381-386.) and **anaerobic digestion** (Ergüder et al. (2001). Anaerobic biotransformation and methane generation potential of cheese whey in batch and UASB reactors. Waste management 21(7), 643-650.), **composting** (Vlyssides et al. (1996). Study of a demonstration plant for the co-composting of olive-oil-processing wastewater and solid residue. Bioresource technology 56(2-3), 187-193.), **artificial wet areas** (Gutiérrez-Sarabia et al. (2004). Slaughterhouse wastewater treatment in a full-scale system with constructed wetlands. Water environment research 76(4), 334-343.), **enzymatic processes** (Casa et al. (2003). Reduction of the phenolic components in olive-mill wastewater by an enzymatic treatment and its impact on durum wheat (Triticum durum Desf.) germinability. Chemosphere 50(8), 959-966) and **fungi** (Zhang et al. (2008). Production of fungal biomass protein using microfungi from winery wastewater treatment. Bioresource technology 99(9), 3871-3876.) and **microalgae growth** (Girard et al. (2014). Mixotrophic cultivation of green microalgae Scenedesmus obliquus on cheese whey permeate for biodiesel production. Algal Research 5, 241-248.).

Regarding the application of physicochemical treatments, should be mentioned the use of **coagulation-flocculation** (Rivas et al. (2010). Treatment of cheese whey wastewater: combined coagulation-flocculation and aerobic biodegradation. Journal of agricultural and food chemistry 58(13), 7871-7877.), **precipitation** (Zouari (1998). Decolorization of olive oil mill effluent by physical and chemical treatment prior to anaerobic digestion. Journal of Chemical Technology and Biotechnology 73(3), 297-303.), **electrochemicals** (Orescanin et al. (2013). Treatment of winery wastewater by electrochemical methods and advanced oxidation processes. Journal of Environmental Science and Health, Part A, 48(12), 1543-1547.), **electrocoagulation** (Bayramoglu et al. (2006). Technical and economic analysis of electrocoagulation for the treatment of poultry slaughterhouse wastewater. Separation and Purification Technology 51(3), 404-408.), **adsorption** (Zagklis et al. (2015). Purification of olive mill wastewater phenols through membrane filtration and resin adsorption/ desorption. Journal of Hazardous Materials 285, 69-76.), **membranes** (Breslau and Kilcullen (1977). Hollow fiber ultrafiltration of cottage cheese whey: Performance study. Journal of Dairy Science 60(9), 1379-1386.) and **dissolved air flotation processes** (Meyssami and Kasaeian (2005). Use of coagulants in treatment of olive oil wastewater model solutions by induced air flotation. Bioresource technology 96(3), 303-307.).

In addition, oxidation processes have been of great importance for the treatment of industrial effluents due to the high effectiveness in reducing contamination. Among the oxidation processes, **ozonation** (Beltrán et al. (1999). Wine distillery wastewater degradation. 1. Oxidative treatment using ozone and its effect on the wastewater biodegradability. Journal of agricultural and food chemistry 47(9), 3911-3918.), Fenton (Centi et al. (2001). 31-0-03-Fe/MFI as a new heterogeneous Fenton-type catalyst in the treatment of wastewater from agroindustrial processes. Studies in surface science and catalysis 135, 181.), **UV radiation, ozonation + UV radiation** (Benitez et al. (1997). Simultaneous photodegradation and ozonation plus UV radiation of phenolic acids-major pollutants in agro-industrial wastewaters. Journal of Chemical Technology and Biotechnology 70(3), 253-260.), **ozonation + UV radiation + H₂O₂** (Lucas et al. (2010). Treatment of winery wastewater by ozone-based advanced oxidation processes (O3, O3/UV and O3/UV/H2O2) in a pilot-scale bubble column reactor and process economics. Separation and Purification Technology 72(3), 235-241.), **solar photocatalysis** (Banu et al. (2008). Treatment of dairy wastewater using anaerobic and solar photocatalytic methods. Solar Energy 82(9), 812-819.) **and supercritical oxidation** (Rivas et al. (2001). Supercritical water oxidation of olive oil mill wastewater. Industrial & engineering chemistry research 40(16), 3670-3674.).

In the article "Ginos et al. (2006). Treatment of olive mill effluents by coagulation-flocculation-hydrogen peroxide oxidation and effect on phytotoxicity. Journal of Hazardous Materials 133(1-3), 135-142.", hydrogen peroxide was used in combination with iron salts (Fenton process). The oxidant was added in two different ways:
1) Immediately after addition of Fe (II) and the mixture was allowed to stir for several hours at 90 rpm, followed by addition of polyelectrolyte, or
2) After the addition of Fe (II) and polyelectrolyte.

Thus, the article "Ginos et al. (2006)" differs from the current invention, which applies three strong oxidants (H₂O₂, Ca(ClO)₂ and CaO₂) to raw agro-industrial wastewater without addition of iron species or polyelectrolytes. In this regard, the current invention also differs from the following articles using the Fenton process: "Prazeres et al. (2013). Fenton-like application to pretreated cheese whey wastewater. Journal of environmental management 129, 199-205."; "Ahmadi et al. (2005). Application of the central composite design and response surface methodology to the advanced treatment of olive oil processing wastewater using Fenton's peroxidation. Journal of Hazardous Materials 123(1-3), 187-195."; e "Rivas et al. (2001). Treatment of olive oil mill wastewater by Fenton's reagent. Journal of agricultural and food chemistry 49(4), 1873-1880.".

The article "Jain and Khambete (2013). Role of strong oxidants in reducing COD: Case study at common effluent treatment plant Vapi, Guj., India. Proceedings of the 13th International Conference on Environmental Science and Technology. 5-7 September, Athens, Greece." refers to the application of strong oxidants (sodium hypochlorite, calcium hypochlorite and hydrogen peroxide and combinations thereof) for the treatment of secondary effluents (domestic and industrial) with removal of COD. The article "Jain and Khambete (2013)" mentions the use of different concentrations of dilute solutions of calcium hypochlorite and hydrogen peroxide for a reaction time of 1 hour. Thus, the current invention differs from the article "Jain and Khambete (2013), "since it applies concentrated solutions of strong oxidants to raw agro-industrial wastewater in violent agitation up to 24 hours, which leads to the instant formation of particle agglomerates, suspensions and foams, followed by the application of two agitation systems (average for 1 minute and low for 1 minute), settling of the agglomerates, resting with the supernatant in contact with the precipitant and phase separation (supernatant and precipitate). In addition, the previously mentioned processes allow for the removal of not only organic matter in the form of COD, but also the reduction of turbidity, nutrients (phosphorus, calcium and magnesium), characteristic absorbance and total phenols.

The article "Ksibi (2006). Chemical oxidation with hydrogen peroxide for domestic wastewater treatment. Chemical Engineering Journal 119(2-3), 161-165." refers to the application of hydrogen peroxide in different concentrations for the treatment of domestic waste water in a reaction time of 30 minutes to 3 hours. In this sense, the article "Ksibi (2006)" differs from the current invention, which presents a method of treatment of agro-industrial wastewater with three types of strong oxidants. Furthermore, in the article "Ksibi (2006)" there is no mention of the need for the raw samples to be in violent agitation, the instantaneous formation of particle agglomerates, suspensions and foams, the application of two different agitation systems, settling of the agglomerates, with the supernatant in contact with the precipitate and phase separation.

Similarly, the article "Shokrollahzadeh et al. (2012). Chemical oxidation for removal of hydrocarbons from gas-field produced water. Procedia Engineering 42, 942-947." refers to the use of hydrogen peroxide, ozone and calcium hypochlorite for the removal of organic matter (COD) from gas flow water from a refinery. In this article, chemical oxidation occurred at 30°C, there being no further indications about the speed of previous agitation of the samples, the instantaneous formation of particle agglomerates, suspensions and foams, the application of two different agitation systems, settling of the agglomerates, the supernatant in contact with the precipitate and phase separation.

The article "Lucas et al. (2010). Treatment of winery wastewater by ozone-based advanced oxidation processes (O3, O3/UV and O3/UV/H2O2) in a pilot-scale bubble column reactor and process economics. Separation and Purification Technology 72(3), 235-241." mentions the use of hydrogen peroxide but in combination with ozone and ultraviolet radiation for treating wastewater from a winery, differing from the current invention which uses concentrated solutions of strong oxidants alone. Similarly, the article "Cao and Mehrvar (2011). Slaughterhouse wastewater treatment by combined anaerobic baffled reactor and UV/H2O2 processes. Chemical Engineering Research and Design 89(7), 1136-1143." refers to the use of hydrogen peroxide but in combination with ultraviolet radiation.

The article "Zouari (1998)" refers to the use of hydrogen peroxide in different concentrations for reducing optical density, low removal of COD (19%) and disappearance of simple aromatics in wastewater from mill. However, this article differs from the current invention, since no reference is made to the speed of agitation of previous samples, instant formation of particle agglomerates, suspensions and foams, application of two different agitation systems, settling of the agglomerates, resting with the supernatant in contact with the precipitate and phase separation. The article "Zouari (1998)" reports that at the pH of the raw effluent (4-5,5) there was no oxidation effect with hydrogen peroxide, which was improved to pH=3 using HCl to correct pH. The proposed process allows for pH high removal effectiveness from the raw effluent. The article "Zouari (1998)" also refers to the need for high temperatures (up to 37°C) to increase the removal of optical density.

The patent application PT 109605 relates to a treatment in several raw effluents from the ethanol industry by precipitation processes with alkali metal hydroxides (sodium or calcium hydroxide) and iron salts (iron chloride or iron sulphate) and zone sedimentation, differing from the current invention. The current invention uses strong oxidants (hydrogen peroxide, calcium hypochlorite and calcium peroxide) at concentrations between 1 and 15 g L⁻¹ and applies to water from dairies, slaughterhouses, mills and wineries. In addition, the treatment referred to in this application claims two precipitation steps occurring for short times, differing from the current invention, which applies oxidation processes for longer periods of time.

The patent application PT 109331 relates to a basic chemical precipitation process with the addition of concentrated strong base solution (NaOH) for the treatment of sugar cane vinasse, differing from the current invention, which uses oxidation processes with hydrogen peroxide, calcium hypochlorite and calcium peroxide for the treatment of water from dairies, slaughterhouses, mills and wineries.

The patent application PT 109217 relates to a sugarcane vinasse valorisation process for the reduction of calcium, magnesium and phosphorus with formation of by-products, differing from the current invention. This patent application claims a valorisation process by acidic chemical precipitation through the addition of a concentrated solution of a strong acid, specifically sulphuric acid, to the sugar cane vinasse, differing from the current invention, which uses oxidation processes with hydrogen peroxide, calcium hypochlorite and calcium peroxide to treat water from dairies, slaughterhouses, mills and wineries.

### Comparative advantages of the Invention

Compared with the processes referred to in the previous chapter, the method presented in the current invention has the following advantages:
- The oxidation processes are easily applied and implemented in the raw waste water, requiring only a reactor with agitation and a settler;
- Oxidation processes occur at room pressure and temperature in the presence of light and oxygen;
- The presented oxidation processes can be used in the raw waste water, without the need to apply a pre-treatment to adjust to the matrix properties
- Oxidation processes do not require a specific microorganism community as it does in conventional biological processes;
- Oxidation processes improve the properties of waste water (such as biodegradability), making the implementation of conventional biological processes such as post-treatment easier;
- The oxidation processes reduce the organic and solid loads, facilitating the implementation of physicochemical processes such as membranes that present problems of fouling when applied to raw waste water;
- Oxidation processes require agitation systems which are easily executable on an industrial scale;
- The settling stage of the particle agglomerates, suspensions and foams is fast with time up to 2 hours and occurs by gravity;
- The resting stage with supernatant and precipitate in contact is applied at room temperature and pressure;
- Oxidation processes produce clarified waste water with a lower level of contamination compared to raw waste water;
- The oxidation processes allow to remove organic and nutritional loads in terms of COD, turbidity, phosphorus, calcium, magnesium, characteristic absorbance and total phenols;
- The precipitates present variable characteristics depending on the type and characteristics of the water, type and concentration of oxidant;
- The by-products obtained (treated waste water and sludge) can be valued by physicochemical and biological processes and used in agriculture;
- The strong oxidants used are easy to come by on the market and are used in industry.

### Brief Description of the Figures

Figure 1 - Application of oxidation with CaO₂ to slaughterhouse wastewater (1 g L⁻¹). Initial COD = 231 mg L⁻¹.
Figure 2 - Application of oxidation with CaO₂ to slaughterhouse wastewater (1 g L⁻¹). Initial COD = 481 mg L⁻¹.
Figure 3 - Application of oxidation with H₂O₂ to slaughterhouse wastewater (1 g L⁻¹ at pH 3,0). Initial COD = 717 mg L⁻¹.
Figure 4 - Application of oxidation with CaO₂ to winery wastewater (1 g L⁻¹). Initial COD = 597 mg L⁻¹.
Figure 5 - Application of oxidation with CaO₂ to the winery wastewater (1 g L⁻¹). Initial COD = 603 mg L⁻¹.
Figure 6 - Application of H₂O₂ oxidation to the winery wastewater (1 g L⁻¹). Initial COD = 1733 mg L⁻¹.
Figure 7 - Application of oxidation with H₂O₂ to winery wastewater (1 g L⁻¹). Initial COD = 975 mg L⁻¹
Figure 8 - Efficiency of the oxidation process with the addition of calcium hypochlorite (2 g L⁻¹) for the physicochemical treatment of dairies' wastewater. Removal of turbidity, total phenols and characteristic absorbance at 220, 254, 410 and 600 nm.
Figure 9 - Efficiency of the oxidation process with the addition of calcium peroxide (6 g L⁻¹) for the physicochemical treatment of slaughterhouse wastewater. Removal of turbidity, total phenols, total phosphorus, calcium, COD and characteristic absorbance at 220, 254, 410 and 600 nm.
Figure 10 - Efficiency of the oxidation process with the addition of hydrogen peroxide (5 g L⁻¹) for physicochemical treatment of winery wastewater. Removal of turbidity, total phenols, total phosphorus, calcium, COD and characteristic absorbance at 220, 254, 410 and 600 nm.
Figure 11 - Method for treatment of agro-industrial wastewater by oxidation-precipitation processes with hydrogen peroxide, calcium hypochlorite and calcium peroxide.
   1. Concentrated solution of strong oxidants (hydrogen peroxide, calcium hypochlorite or calcium peroxide);
   2. Immediate incorporation of concentrated solutions of strong oxidants at concentrations between 1 and 15 g L⁻¹ into raw agro-industrial waste water, which remains in violent agitation of 1200-1400 rpm, pressure and room temperature in the presence of light and oxygen, with instant formation of particle agglomerates, suspensions and foams;
   3. Residual water mixture and concentrated solution of strong oxidants subjected to a violent speed agitation system of 1200-1400 rpm up to 24 hours with formation of particle agglomerates, suspensions and foams;
   4. Residual water mixture and concentrated solution of strong oxidants subjected to average speed agitation system of 700-800 rpm for 1 minute with formation of particle agglomerates, suspensions and foams;
   5. Residual water mixture and concentrated solution of strong oxidants subjected to a low speed agitation system of 300-400 rpm for 1 minute with formation of particle agglomerates, suspensions and foams;
   6. Settling of particle agglomerates, suspensions and foams formed, with formation of two portions: supernatant or treated water and precipitate or sludge;
   7. Rest of the precipitate and supernatant in contact for up to 72 hours.

### Detailed Description of the Invention

The current invention relates to a method for the treatment of agro-industrial waste water from dairies, slaughterhouses, mills and wineries, by processes based on oxidation reactions with strong oxidants at concentrations between 1 and 15 g L⁻¹. The processes are initiated incorporating concentrated solutions of strong oxidants into raw agro-industrial waste water under violent agitation, pressure and room temperature in the presence of light and oxygen with immediate formation of particle agglomerates, suspensions and foams, followed by up to a 24 hour rest of the waste water with the oxidants. Thereafter, two agitation systems are applied: average agitation of 700-800 rpm for 1 minute, and low agitation of 300-400 rpm for 1 minute. These agitation systems allow for the formation of particle agglomerates, suspensions and foams. After the interruption of the agitation systems, the particle agglomerates, suspensions and foams are deposited, forming two fractions: supernatant or treated water and precipitate or sludge. After deposition, the precipitate and the supernatant in contact rest for up to 72 hours. After this time, the two fractions are separated. The oxidation processes developed allow for the removal of organic contamination and nutrients from raw agro-industrial waste water, reducing COD, turbidity, phosphorus, calcium, magnesium, characteristic absorbance and total phenols. During the development of oxidation processes the generation of precipitates (sludge) is noted. The physicochemical characteristics of the precipitates depend on several factors, namely water type and characteristics, and oxidant type and concentration. Generally, the precipitates present in their constitution organic matter and nutrients that can be valued.

### Industrial application

The physicochemical processes presented are composed of simple and inexpensive steps to treat raw agro-industrial waste water from dairies, slaughterhouses, mills and wineries. These processes consist of the immediate incorporation of strong oxidants such as hydrogen peroxide, calcium hypochlorite and calcium peroxide at concentrations between 1 and 15 g L⁻¹ into the raw samples under violent agitation, at room temperature and pressure and in the presence of oxygen and light. The addition of oxidants leads to the formation of particle agglomerates, suspensions and foams. This step lasts for up to 24 hours, followed by two different agitation systems which lead to the formation of particle agglomerates, suspensions and foams. The former system corresponds to an average agitation of 700-800 rpm for 1 minute, and the latter system comprises a low agitation of 300-400 rpm for 1 minute, with formation of particle agglomerates, suspensions and foams. The sedimentation stage occurs for time intervals of up to 2 hours, leading to the formation of two distinct stages: treated waste water (supernatant) and sludge (precipitate). After sedimentation, the supernatant is allowed to stand in contact with the precipitate for up to 72 hours. The separation of the formed stages follows. Biological processes (aerobic and anaerobic digestion, composting, artificial wet areas, enzymatic processes and growth of fungi and microalgae) and physicochemical processes (coagulation-flocculation, precipitation, electrochemicals, electrocoagulation, adsorption, membranes, dissolved air flotation and advanced oxidation) have been used for agro-industrial waste water management. Although they allow for the removal of organic matter, solids, oils and fats, nutrients and microorganisms, the processes in use show some drawbacks. The biological processes present operating instability, a need for adaptation of the microbial community, sensitivity to the variations of the characteristics of waste waters and effluent production with parameters above environmental legislation. Physicochemical processes exhibit simplicity, rapid reaction speed, disposal of organic and inorganic and pathogenic compounds. However, they may be expensive, require pre-treatment, effluent and toxic by-products production, some systems may be hazardous, and there is interference from some species. Thus, the developed processes comprise new alternatives for agro-industrial waste water management, and may serve as a supplement to physicochemical and biological processes already in use.

The developed processes comprise simple, economical and easy-to-implement steps, making this option applicable to industry. Applied oxidants are readily found in the industry, and reactions occur at room temperature and pressure in the presence of oxygen and light. In addition, wastewater does not require the application of pre-treatment to be subjected to the developed processes. These processes lead to the treatment of agro-industrial wastewater by reduction of COD, turbidity, phosphorus, calcium, magnesium, characteristic absorbance and total phenols with the formation of clarified supernatants. On the other hand, the processes produce precipitates rich in organic matter and nutrients with recovery potential.

### Agro-industrial wastewater

Agro-industrial wastewater is an environmental and public health issue due to the content of organic and inorganic compounds, the presence of solids, oils and fats and nutrients, and the existence of extreme pH conditions. Thus, these effluents can cause eutrophication, salinization, deoxygenation, acidification, toxicity and microbial contamination, being needed technologies capable of reducing the level of contamination. In this sense, these effluents have been treated with biological and physicochemical processes. However, these processes have some drawbacks. In some cases, the biological processes require the application of a pre-treatment, they need the development of an appropriate microbial community and they exhibit difficulties of reactors' stabilization. Physicochemical processes may be costly, require pre-treatment, may be hazardous, produce toxic by-products and exhibit some interference. Its application in soils as fertilizer has also been studied as well as evaporation in storage ponds. However, these options can lead to contamination of soil and surface and groundwater, and air emissions. Therefore, it is necessary to develop and implement alternative management mechanisms to tackle these problematic effluents.

### Composition of raw agro-industrial wastewater

The production of cheese, meat, wine and olive oil leads to the production of wastewater with a high level of organic and inorganic contamination. In order to study the physicochemical properties of this type of effluents, samples were collected at companies located in the Alentejo region. The physicochemical composition of wastewater from dairies, slaughterhouses, mills and wineries are shown in Table 1. The residual water from dairies and mills has acidic pH (4,16-4,85), whereas the wastewater from wineries and slaughterhouses show pH close to neutrality (6,70-7,17). These residual waters are rich in organic matter with COD values in the range of 1550,0-8233,3 mg L⁻¹ and nutrients such as phosphorus (187,3-4894,1 mg L⁻¹), calcium (95,7-270, 8 mg L⁻¹) and magnesium (40,1-248,1 mg L⁻¹). The salinity level is also a worrisome parameter (1,52-5,54 dS m⁻¹), mainly for waste water from dairies. These effluents also show total phenols (24,2-638,5 mg L⁻¹) in its composition.

**Table 1. Physicochemical properties of raw agro-industrial wastewater**

| **Parameter** | **Unit** | **Dairies** | **Mills** | **Slaughterhouses** | **Wineries** |
|---|---|---|---|---|---|
| pH | Sorensen scale | [4,16-4,68] | [4,49-4,85] | [6,70-7,17] | [6,75-6,89] |
| Conductivity | dS m⁻¹ | [4,86-5,54] | [2,50-2,80] | [2,87-3,09] | [1,52-1,69] |
| Turbidity | NTU | [536,5-659,7] | [277,1-281,6] | [584,6-948,8] | [185,8-552,7] |
| COD | mg L⁻¹ | [4416,7-5250,0] | [7416,7-8233,3] | [3483,3-5883,3] | [1550,0-2650, 0] |
| Phosphorus | mg L⁻¹ | [1796,1-4894,1] | [840,7-1537,3] | [577,2-805,1] | [187,3-250,6] |
| Calcium | mg L⁻¹ | [195,6-270,8] | [180,5-270,8] | [120,3-173,3] | [95,7-127,6] |
| Magnesium | mg L⁻¹ | [72,1-172,4] | [43,3-248,1] | [47,1-96,4] | [40,1-95,7] |
| Total alkalinity | mg L⁻¹CaCO₃ | [1155,4-1708,5] | [1954,3-2925,3] | [907,5-1137,3] | [677,8-907,5] |
| Bicarbonates | mg L⁻¹CaCO₃ | [1155,4-1708,5] | [1954,3-2925,3] | [907,5-1137,3] | [677,8-907,5] |
| Total hardness | mg L⁻¹CaCO₃ | [934,6-1347,5] | [628,6-1471,3] | [555,5-829,1] | [465,4-632,6] |
| Calcium hardness | mg L⁻¹CaCO₃ | [487,9-675,6] | [450,4-675,6] | [300,3-432,4] | [238,7-318,3] |
| Magnesium hardness | mg L⁻¹CaCO₃ | [296,5-709,4] | [178,2-1020,9] | [193,7-396,8] | [165,1-393,9] |
| Total phenols | mg L⁻¹ | [65,0-82,9] | [502,5-638,5] | [24,9-48,4] | [24,2-30,5] |

| Absorbance | | | | | |
|---|---|---|---|---|---|
| 220 nm | - | [0,599-0,700] (1:50) | [0,860-1,100] (1:50) | [0,138-0,242] (1:50) | [0,102-0,206] (1:50) |
| 254 nm | - | [0,157-0,196] (1:50) | [0,253-0,406] (1:50) | [0,065-0,136] (1:50) | [0,056-0,137] (1:50) |
| 410 nm | - | [0,083-0,101] (1:50) | [0,053-0,091] (1:50) | [0,030-0,071] (1:50) | [0,012-0,049] (1:50) |
| 600 nm | - | [0,053-0,071] (1:50) | [0,023-0,038] (1:50) | [0,032-0,082] (1:25) | [0,061-0,077] (1:20) |

| | | | | | |
|---|---|---|---|---|---|
| COD - Chemical oxygen demand. Absorbance values plotted after dilution with distilled water using different ratios. | | | | | |

### Physicochemical processes for agro-industrial waste water treatment

### Oxidation-precipitation processes with the addition of strong oxidants

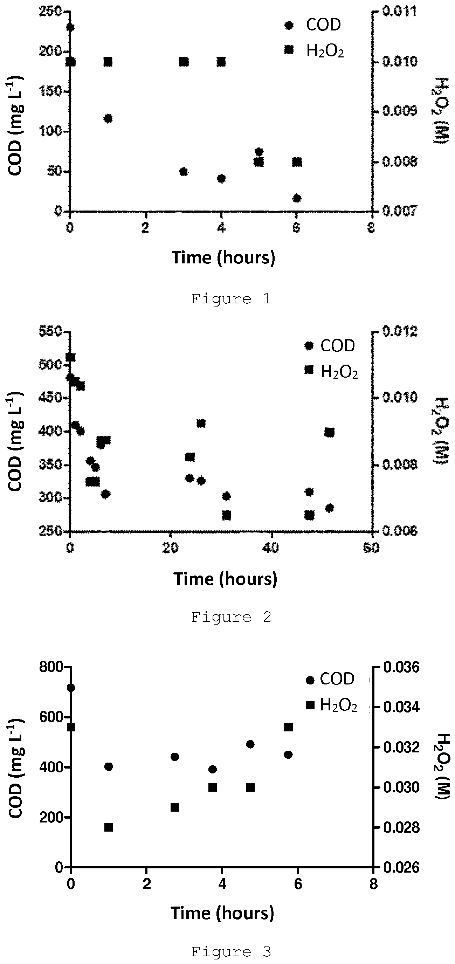

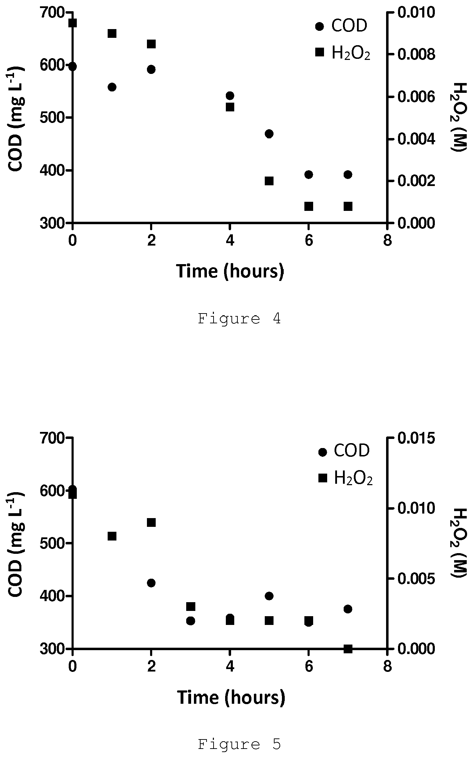

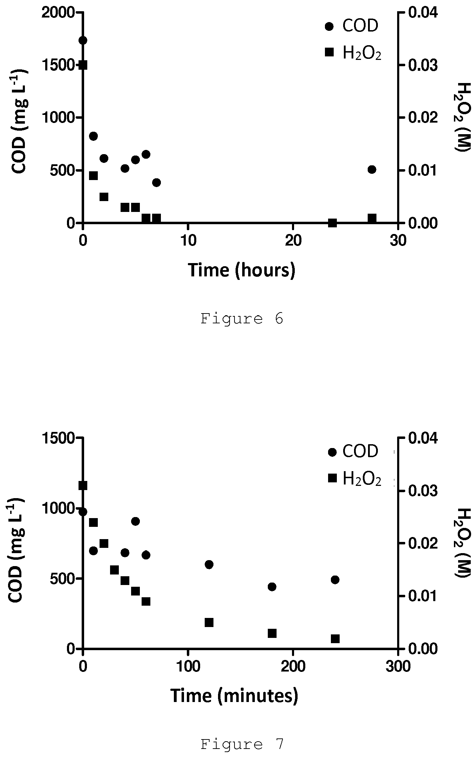

The processes developed for the physicochemical treatment of agro-industrial wastewater are composed of easy and economical implementation steps. The developed processes begin with oxidation by incorporating strong oxidants, such as hydrogen peroxide, calcium hypochlorite and calcium peroxide at concentrations of 1 to 15 g L⁻¹ into raw agro-industrial wastewater from dairies, slaughterhouses, mills and wineries. This incorporation leads to the formation of particle agglomerates, suspensions and foams and occurs with raw wastewater in violent agitation (1200-1400 rpm), at room temperature and pressure, and in the presence of oxygen and light, up to 24 hours. Figures 1 to 7 show the kinetics of the process, being observed a reduction of organic matter monitored by COD over time to the wastewater from slaughterhouses and wineries incorporating CaO₂ oxidant and H₂O₂ under different conditions.

Then, two different agitation systems are implemented: average agitation of 700-800 rpm for 1 minute and low agitation of 300-400 rpm for 1 minute. After agitation interruption, the particle agglomerates, suspensions and foams settle by gravity for up to 2 hours, forming two distinct stages: treated wastewater (supernatant) and sludge (precipitate). A resting step of the supernatant in contact with the precipitate follows for up to 72 hours. Then, the phases formed are separated: treated water and sludge.

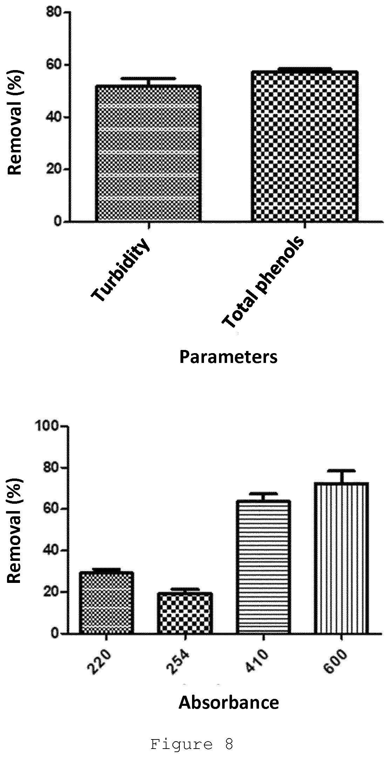

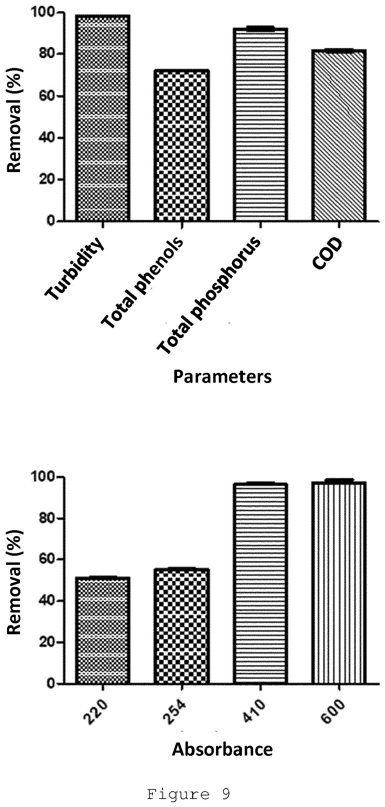

The process removal effectiveness was evaluated by measuring pH, conductivity, characteristic absorbance (220, 254, 410 and 600 nm), turbidity, COD, phosphorus, calcium, magnesium, hydroxides, carbonates, bicarbonates and total phenols. The developed processes allow for the reduction of the level of contamination evaluated by turbidity, total phenols, total phosphorus, calcium, magnesium, COD and characteristic absorbance. Figures 8, 9 and 10 show examples on the usage of the oxidation processes in the treatment of raw agro-industrial wastewater from dairies, slaughterhouses and wineries, respectively. The treatment of wastewater from dairies by oxidation using calcium hypochlorite (2 g L⁻¹) led to the reduction of turbidity (51,7%), total phenols (57,2%) and characteristic absorbance (19,3-72,4%). Whereas the application of oxidation processes with calcium peroxide (6 g L⁻¹) to the slaughterhouse waste water allowed for the reduction of turbidity (98,4%), total phenols (72,2%), phosphorus (92,2%), COD (81,6%) and characteristic absorbance (51,1-97,2%).

The treatment of winery wastewater using hydrogen peroxide (5 g L⁻¹) led to the removal of turbidity (92,9%) total phenols (89,9%), phosphorus (34,9%), calcium (56,8%), COD (75,0%) and characteristic absorbance (57,1-97,7%).

### Physicochemical composition of wastewater treated with oxidation-precipitation processes with the addition of strong oxidants

The physicochemical composition of the waste water treated with oxidation-precipitation processes with the addition of strong oxidants was evaluated by pH, electrical conductivity, characteristic absorbance (220, 254, 410 and 600 nm), turbidity, COD, total hardness and calcium, calcium, magnesium, phosphorus, total alkalinity and methyl orange, carbonates, bicarbonates, hydroxides and total phenols measurements. Table 2 shows examples of the physicochemical composition of treated wastewater resulting from the application of oxidation processes incorporating strong oxidants into the agro-industrial waste water studied. The use of calcium hypochlorite (2 g L⁻¹) to treat waste water from dairies led to the production of treated waste water with acid pH (4,49), salinity level of 7,24 dS m⁻¹ and rich in organic matter and nutrients (phosphorus, calcium and magnesium). The addition of calcium peroxide (6 g L⁻¹) to the treatment of waste water from slaughterhouse led to a treated waste water with basic properties (pH = 12,05) and a lower level of contamination in terms of turbidity (12,9 NTU), total phenols (9,7 mg L⁻¹), phosphorus (52,5 mg L⁻¹) and COD (857, 0 mg L⁻¹). The application of hydrogen peroxide (5 g L⁻¹) to the treatment of winery waste water resulted in treated waste water with properties close to neutrality (6,78), salinity level of 1,50 dS m⁻¹ and lower contamination regarding turbidity (22,8 NTU), total phenols (89,9 mg L⁻¹), phosphorus (136,7 mg L⁻¹), calcium (47,8 mg L⁻¹) and COD (500, 0 mg L⁻¹).

**Table 2. Physicochemical properties of treated wastewater obtained in oxidation-precipitation processes**

| **Parameter** | **Unit** | **Dairies** | **Slaughterhouses** | **Wineries** |
|---|---|---|---|---|
| pH | Sorensen scale | 4,49±0,004 | 12,05 | 6,78 |
| Conductivity | dS m⁻¹ | 7,24±0,028 | 4,13 | 1,50 |
| Turbidity | NTU | 287,3±18,72 | 12,9±0,00 | 22,8±3,23 |
| COD | mg L⁻¹ | - | 857,0±23,75 | 500,0±117,9 |
| Phosphorus | mg L⁻¹ | 4423,5±55,46 | 52,5±4,48 | 136,7±0,00 |
| Calcium | mg L⁻¹ | 526,5±21,27 | 373,2±10,8 | 47,8±0,00 |
| Magnesium | mg L⁻¹ | 213,5±6,45 | 90,5±0,0 | 81,2±6,8 |
| Total alkalinity | mg L⁻¹CaCO3 | 1032,5±86,91 | 993,7±40,6 | 585,9±123,0 |
| Bicarbonates | mg L⁻¹CaCO3 | 1032,5±86,91 | 304,4±40, 6 | 585,9±123,0 |
| Carbonates | mg L⁻¹CaCO3 | 0,0±0,0 | 689,3±0,0 | 0,0±0,0 |
| Total hardness | mg L⁻¹CaCO3 | 2192,0±26,54 | 1303,7±26,9 | 453,6±28,1 |
| Calcium hardness | mg L⁻¹CaCO3 | 1313,7±53,08 | 931,2±26,9 | 119,4±0,0 |
| Magnesium hardness | mg L⁻¹CaCO3 | 878,3±26,54 | 372,5±0,0 | 334,2±28,1 |
| Total phenols | mg L⁻¹ | 33,7±0,95 | 9,7±0,0 | 89,9±1,7 |

| Absorbance | | | | |
|---|---|---|---|---|
| 220 nm | - | 0,454±0,0120 (1:50) | 0,090±0,001 (1:50) | 0,061±0,005 (1:50) |
| 254 nm | - | 0,146±0,0035 (1:50) | 0,042±0,000 (1:50) | 0,028±0,004 (1:50) |
| 410 nm | - | 0,034±0,0035 (1:50) | 0,002±0,000 (1:50) | 0,006±0,001 (1:50) |
| 600 nm | - | 0,017±0,0035 (1:50) | 0,001±0,000 (1:50) | 0,001±0,000 (1:50) |

Treated wastewater obtained by applying 2, 6 and 5 g L⁻¹ of calcium hypochlorite, calcium peroxide and hydrogen peroxide to treat wastewater from dairies, slaughterhouses and wineries. COD-Chemical Oxygen Demand, Absorbance values plotted after dilution with distilled water.

### Production of by-products (sludge)

The oxidation processes developed lead to the generation of precipitates with different properties, depending on the type and characteristics of the water, type and concentration of oxidant. Table 3 shows examples of the volume of precipitate generated with the use of oxidation processes for the treatment of agro-industrial wastewater. In this sense, the maximum formation of 120 mL of precipitate per liter of effluent was noted. The sludge produced has organic matter and nutrients in its composition.

**Table 3. Volume of sludge generated in oxidation-precipitation processes with strong oxidants**

| **Wastewater type** | **Unit** | **Volume** |
|---|---|---|
| Dairies | mL L⁻¹ of effluent | 16,0-120,0 |
| Slaughterhouses | mL L⁻¹ of effluent | 12,5-75,0 |
| Mills | mL L⁻¹ of effluent | 0,0-47,5 |
| Wineries | mL L⁻¹ of effluent | 11,0-40,0 |

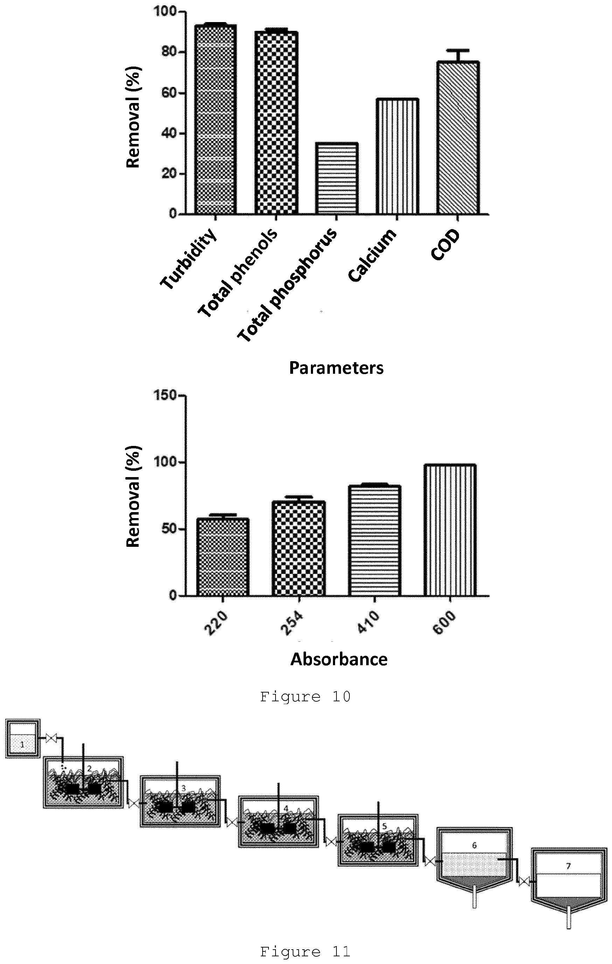

Figure 11 shows the diagram of the agro-industrial wastewater physicochemical treatment method by means of oxidation-precipitation processes incorporating strong oxidants.

## Claims

1. A method for treatment of agro-industrial wastewater through oxidation-precipitation processes, consisting of the following steps:
a) Incorporating concentrated solutions of strong oxidants such as hydrogen peroxide, calcium hypochlorite and calcium peroxide at concentrations ranging from 1 to 15 g L⁻¹ into the raw wastewater under violent agitation, preferably in the range of 1200-1400 rpm, at room pressure and temperature in the presence of light and oxygen with formation of particle agglomerates, suspensions and foams;
b) Mixture of residual water and concentrated solution of strong oxidants subject to a violent speed agitation system of 1200-1400 rpm up to 24 hours with formation of particle agglomerates, suspensions and foams;
c) Mixture of residual water and concentrated solution of strong oxidants subject to average speed agitation system of 700-800 rpm for 1 minute with formation of particle agglomerates, suspensions and foams;
d) Mixture of residual water and concentrated solution of strong oxidants subject to a low speed agitation system of 300-400 rpm for 1 minute with formation of particle agglomerates, suspensions and foams;
e) Termination of the agitation systems;
f) Gravity settling of the insoluble particle agglomerates formed at steps a) to d) for times less than or equal to 2 hours;
g) Precipitate formation;
h) Resting with the supernatant in contact with the precipitate formed for times up to 72 hours;
i) Separation of the supernatant and precipitate.

2. A method according to claim 1, **characterized in that** is applied in raw agro-industrial wastewater without any kind of correction or previous modification either.
